# EUROPEAN PATENT APPLICATION

(11) **EP 2 953 109 A1**
(43) Date of publication of application: **09.12.2015**
(21) Application number: 13873925.5
(22) Date of filing: 01.02.2013
(51) Int. Cl.: G08G 1/00, G08G 1/01

(54) **TRAVEL TIME PREDICTION METHOD, TRAVEL TIME PREDICTION DEVICE, AND PROGRAM**

(71) Applicant: Fujitsu Limited, Kawasaki-shi, Kanagawa 211-8588 (JP)
(72) Inventor: SHINAGAWA, Akio, Kawasaki-shi Kanagawa 211-8588 (JP); TAMAI, Kyohei, Kawasaki-shi Kanagawa 211-8588 (JP); IKEDA, Yuichi, Kawasaki-shi Kanagawa 211-8588 (JP)
(74) Representative: Hoffmann Eitle
(86) International application number: PCT/JP2013/052382
(87) International publication number: WO 2014/118970

(57) **Abstract**

A computer refers to a storage unit that stores plural pieces of observation data formed by observing, at a plurality of timings, a travel time taken for a vehicle to pass through a road section. The computer then obtains a first statistical value of the travel time at a first time of a prediction target day on the basis of two or more of the plural pieces of observation data for the road section. The computer further obtains a second statistical value of the travel time at a second time that is later than the first time. The computer then calculates a prediction value of the travel time for the road section at the second time on the basis of the first statistical value, the second statistical value, and the travel time for the road section observed at the first time. In this case, the computer calculates the prediction value such that a difference between the second statistical value and the prediction value of the travel time for the road section at the second time is smaller than a difference between the first statistical value and the travel time for the road section observed at the first time.

## Description

### Technical Field

The present invention is related to a travel time prediction method, a travel time prediction device, and a program.

### Background Art

A travel time prediction method is known in which a travel time taken for a vehicle to pass through a road section is predicted on the basis of plural pieces of travel time statistical data collected in the past (see, for example, Patent Document 1).

In this travel time prediction method, travel time measurement data for a road section up to the current time of a particular day is collected, and plural pieces of travel time statistical data for the road section are obtained that have been collected in the past and that have the same traffic condition as that of the particular day. Then, from among the obtained pieces of travel time statistical data, plural pieces of travel time statistical data for which a time fluctuation tendency is similar to that of the travel time measurement data are selected, and from among the selected plural pieces of travel time statistical data, pieces of data that deviate from distribution with respect to data after the current time are excluded. On the basis of non-excluded pieces of travel time statistical data after the current time, a data sequence representing them is created, and travel time prediction data after the current time is obtained on the basis of a difference from or a ratio to the travel time measurement data at the current time of the particular day.

A method for estimating and predicting a route travel time is known in which a travel time of a route including a plurality of small sections is predicted on the basis of past traffic flow data that has been measured and obtained for each of the small sections (see, for example, Patent Document 2).

In this method for estimating and predicting a route travel time, travel times for respective small sections at a present point in time at which prediction is performed are summed, and the sum total of travel times of small sections at the present point in time is obtained. A point in time in the past having a similar traffic condition is extracted by matching traffic flow data distribution in time and space that is formed of a time zone that goes backward to the past by a prescribed time period from a present point in time and peripheral small sections including small sections on a route, and data distribution in time and space at a past point in time.

Then, travel times at the point in time in the past under the similar traffic condition are summed, and the sum total of travel times of small sections at a similar point in time is obtained. A route estimated travel time is obtained as a result of the following process (A) or (B).
(A) Under the assumption of starting from a starting point on a route at a future point in time having a difference to be predicted in a point in time from a point in time in the past under a similar traffic condition, travel times are accumulated while sequentially tracing small sections on the route on the basis of traffic flow data in the past, and a route estimated travel time of the route at the future point in time in the past is obtained.
(B) Under the assumption of arriving at an arrival point on a route at a future point in time having a difference to be predicted in a point in time from a point in time in the past under a similar traffic condition, travel times are accumulated while sequentially tracing small sections on the route on the basis of traffic flow data in the past, and a route estimated travel time of the route at the future point in time in the past is obtained.

A predictive model expressing a relationship between the sum total of travel times of small sections at a similar point in time and the route estimated travel time or a route measured travel time is obtained. Then, a route predicted travel time is obtained on the basis of the predictive model and the sum total of travel times of small sections at a present point in time under the assumption of starting or arriving at a future point in time having a difference to be predicted in a point in time from the present point in time.

### Prior Art Documents

### Patent Documents

Patent Document 1: Japanese Laid-open Patent Publication No. 2005-196238
Patent Document 2: Japanese Laid-open Patent Publication No. 2007-011596

### Summary of the Invention

### Problems to be Solved by the Invention

The conventional travel time prediction methods described above have the following problems.

Traffic volume has periodicity, and fluctuates every day. In many cases, there may be a difference between a travel time predicted on the basis of travel times observed in the past and a travel time observed at a present point in time. As a travel time for a road section, an observed travel time is accurate at a present point in time. However, as a time period passes from the present point in time to the future, a prediction value is generated that does not sufficiently reflect periodicity of traffic volume that is obtained from the travel times observed in the past, unless an intensity of the influence of fluctuation on a prediction target day is changed.

It is an object in one aspect of the invention to improve prediction accuracy of a travel time taken for a vehicle to pass through a road section.

### Means for Solving the Problems

In one aspect, a storage unit stores plural pieces of observation data for a road section that are formed by observing, at a plurality of timings, a travel time taken for a vehicle to pass through the road section.

A travel time prediction method performed by a computer refers to the storage unit. The travel time prediction method obtains a first statistical value of the travel time at a first time of a prediction target day on the basis of two or more of the plural pieces of observation data for the road section. Further, the travel time prediction method obtains a second statistical value of the travel time at a second time that is later than the first time on the basis of the two or more of the plural pieces of observation data.

The travel time prediction method then calculates a prediction value of the travel time for the road section at the second time on the basis of the first statistical value, the second statistical value, and the travel time for the road section observed at the first time. In this case, the prediction value is calculated such that a difference between the second statistical value and the prediction value of the travel time for the road section at the second time is smaller than a difference between the first statistical value and the travel time for the road section observed at the first time.

### Effect of the Invention

A travel time prediction method according to an embodiment enables prediction accuracy of a travel time taken for a vehicle to pass through a road section to be improved.

### Brief Description of Drawings

FIG. 1 illustrates a functional configuration of a travel time prediction device.
FIG. 2 is a flowchart of a travel time prediction process.
FIG. 3 illustrates a travel time table.
FIG. 4 is a flowchart of a process of obtaining a statistical value.
FIG. 5 is a flowchart of a process of calculating a prediction value.
FIG. 6 illustrates a method for calculating a prediction value.
FIG. 7 illustrates a configuration of an information processing device.

### Description of Embodiments

With reference to the drawings, embodiments are described in detail.

Human life is led periodically to some extent in accordance with a date, a day of the week, a time zone, or the like, and the way to use a vehicle that is transportation means is affected by them, and therefore it is considered that the number of vehicles traveling on a road (traffic volume) also has such periodicity. Accordingly, it is considered to utilize travel times observed in the past when predicting a travel time for a road section. Further, it is considered to utilize a travel time that was observed, for example, on the same date of each year, on the same day of each week, or the like as a day under a condition similar to that of a prediction target day.

However, traffic volume has periodicity, and fluctuates every day. In many cases, there is a difference between a travel time predicted on the basis of travel times observed in the past and a travel time observed on a prediction target day, and therefore a prediction value that does not reflect fluctuation in traffic volume on the prediction target day is generated when a travel time on the prediction target day is predicted only on the basis of the travel times observed in the past. In view of the foregoing, the inventors have discovered that a prediction value of a travel time with a higher accuracy can be generated by devising the way to handle a difference between a travel time observed in the past and a travel time observed on the prediction target day.

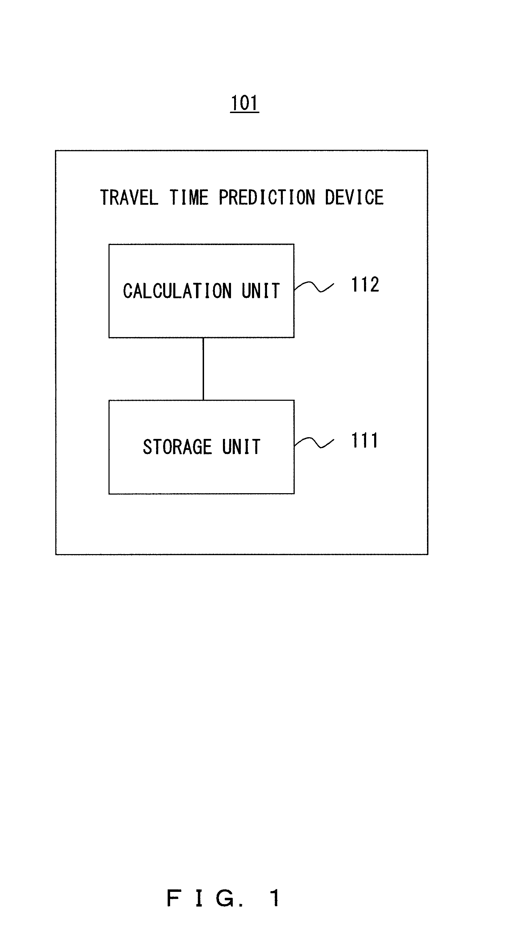

FIG. 1 illustrates an example of a functional configuration of a travel time prediction device according to an embodiment. A travel time prediction device 101 of FIG. 1 includes a storage unit 111 and a calculation unit 112. The storage unit 111 is a storage area that stores plural pieces of observation data obtained by observing a travel time taken for a vehicle to pass through a road section at a plurality of timings for each of the plurality of road sections. The storage unit 111 may store the plural pieces of observation data in association with respective features of the timings at which the respective pieces of observation data have been observed.

The calculation unit 112 is a functional unit that performs calculation in this example by using data stored in the storage unit 111.

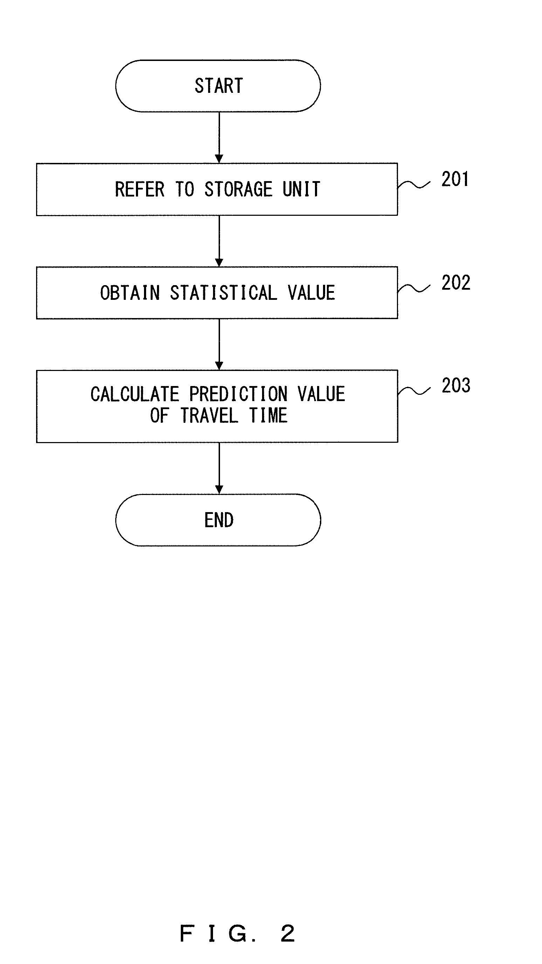

FIG. 2 is a flowchart illustrating an example of a travel time prediction process performed by the travel time prediction device 101 of FIG. 1. The travel time prediction process of FIG. 2 is commenced, for example, when the travel time prediction device 101 receives a travel time prediction request from a user terminal via a communication network. Alternatively, the travel time prediction process of FIG. 2 may be commenced when an operator inputs a travel time prediction request into the travel time prediction device 101.

The calculation unit 112 first refers to the storage unit 111 (step 201). The calculation unit 112 then obtains a first statistical value of a travel time at a first time of a prediction target day on the basis of two or more pieces of observation data among plural pieces of observation data for a prediction target road section among a plurality of road sections (step 202). When the plural pieces of observation data have been stored in the storage unit 111 in association with features of timings at which the respective pieces of observation data have been observed, the first statistical value of the travel time at the first time of the prediction target day can be obtained on the basis of two or more pieces of observation data that correspond to a feature of the prediction target day among the plural pieces of observation data. The calculation unit 112 further obtains a second statistical value of a travel time at a second time that is later than the first time on the basis of two or more pieces of observation data.

The calculation unit 112 then calculates a prediction value of a travel time of a prediction target road section at the second time on the basis of the first statistical value, the second statistical value, and a travel time of the prediction target road section that has been observed at the first time (step 203).

Here, the calculation unit 112 calculates the prediction value such that a difference between the second statistical value and the prediction value of the travel time of the prediction target road section at the second time is smaller than a difference between the first statistical value and the travel time of the prediction target road section observed at the first time. In other words, when calculating the prediction value of the travel time of the prediction target road section at the second time on the basis of the travel time of the prediction target road section observed at the first time, the first statistical value, and the second statistical value, the calculation unit 112 calculates the prediction value in accordance with weighting that has been set such that a weight for the second statistical value increases as a longer time period passes from the first time. To put it another way, the calculation unit 112 calculates the prediction value in accordance with weighting that has been set such that a weight for the travel time of the prediction target road section observed at the first time decreases as a longer time period passes from the first time.

Upon receipt of the travel time prediction request from the user terminal via the communication network, the travel time prediction device 101 transmits information about the calculated prediction value to the user terminal via the communication network. When the travel time prediction request is input into the travel time prediction device 101 by an operator, the travel time prediction device 101 presents the information about the prediction value to the operator by using a display device or the like.

In the travel time prediction process described above, prediction accuracy of a travel time taken for a vehicle to pass through a road section can be improved.

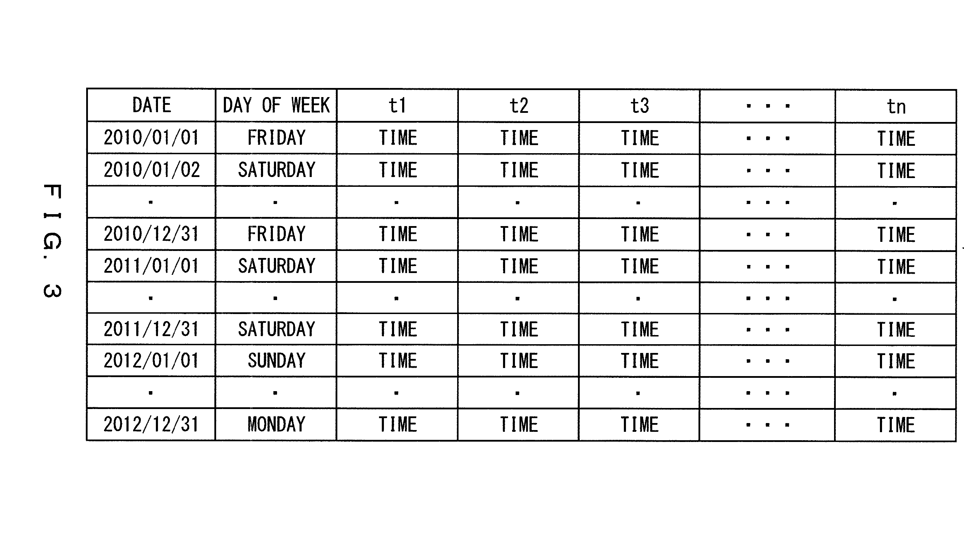

FIG. 3 illustrates an example of a travel time table stored in the storage unit 111. The travel time table of FIG. 3 is an exemplary table for one road section of a plurality of road sections, and includes plural pieces of observation data "TIME" obtained by observing a travel time at a plurality of timings. It is assumed that the travel time table stores respective pieces of observation data "TIME" for similar data items for each of the plurality of road sections, in addition to the illustrated pieces of data.

The observation data "TIME" of the travel time can be obtained by detecting a vehicle passing through a road section by using, for example, a vehicle sensor, a beacon, or the like that has been installed on a road, and by collecting information such as a position of a passage spot or a passage time of a vehicle. The travel time prediction device 101 may obtain observation data "TIME" obtained by another device, via a communication network, or may obtain the information such as a position of a passage spot or a passage time via the communication network and determine observation data "TIME" on the basis of the information.

A date indicates the date, month and year when a travel time is observed, a day of the week indicates a day of the week of the date, month and year, and time t1 to time tn (n is a positive integer) indicate times when the travel time is observed. Time t1 to time tn may be sectioned times in a case in which a day is sectioned into prescribed time intervals, or may be n prescribed times determined in another way.

In the example of FIG. 3, observation data "TIME" for three years from January 1, 2010 to December 31, 2012 is registered, but a time range of observation data may be smaller or greater than three years. In the example of FIG. 3, a prediction target day is January 1, 2013, and December 31, 2012 corresponds to a previous day of the prediction target day.

Dates and time t1 to time tn indicate a plurality of timings at which a travel time is observed, and also indicate features of the timings. As the features of the timings, information relating to a day of the week is added. Therefore, the travel time table of FIG. 3 indicates information associating observation data of a travel time for one road section with a feature of a timing at which the observation data is obtained. The travel time table as describe above is provided for each of the plurality of road sections on which the travel time prediction process is performed.

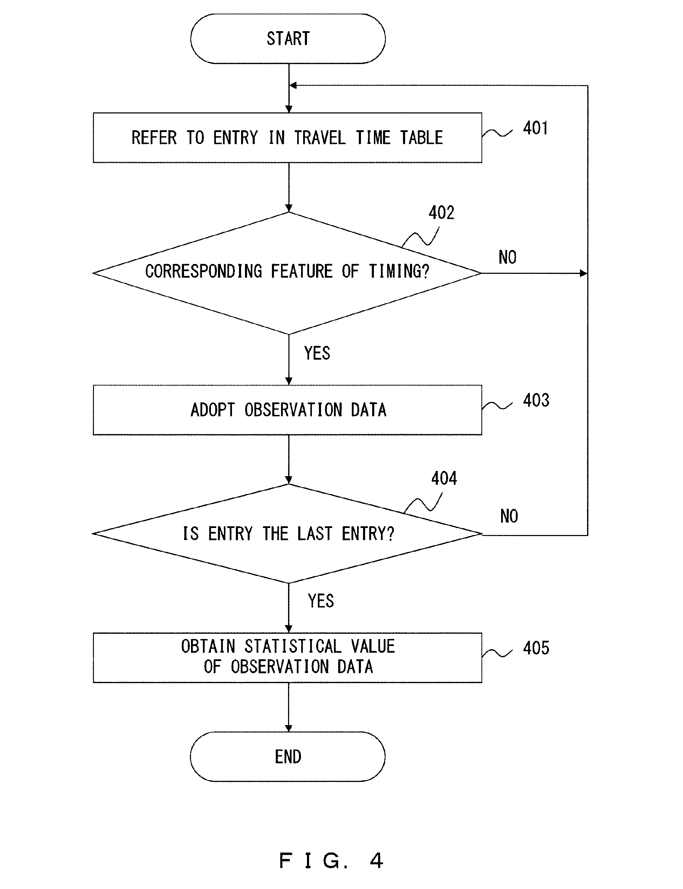

The feature of a timing at which observation data is obtained is not limited to a date, a day of the week, time t1 to time tn of FIG. 3, and may be other features that affect a travel time of a road section. As an example, the feature of the timing may be the morning, the afternoon, or a prescribed time zone in a day, or may be the weather (e.g., fine, cloudy, or rainy) at a timing at which observation data is observed. The feature of the timing may be a traffic regulation or an occurrence status of a traffic congestion at a timing at which observation data is observed. Further, the feature of the timing may be information indicating whether the day when observation data is observed is a weekday. FIG. 4 is a flowchart illustrating an example of a process of obtaining a statistical value in step 201 and step 202 of FIG. 2. The calculation unit 112 first accesses a travel time table for a prediction target road section, which has been stored in the storage unit 111, and sets one entry that has not been referred to as a target to be referred to (step 401). The calculation unit 112 then checks whether a feature of a timing of the entry corresponds to a feature of a prediction target day (step 402).

As an example, when a day of the week is used for the feature of the prediction target day, the calculation unit 112 checks whether a day of the week of the entry in the travel time table is the same as the day of the week of the prediction target day. Alternatively, days of the week may be classified into weekdays and holidays (such as weekends or national holidays), and the calculation unit 112 may check whether the day of the week of the entry in the travel time table falls into the same category as that of the day of the week of the prediction target day.

When a date is used for the feature of the prediction target day, the calculation unit 112 checks whether the day and month of the entry in the travel time table is the same as that of the prediction target day. Alternatively, dates may be classified into a plurality of groups, and the calculation unit 112 may check whether the date of the entry in the travel time table belongs to the same group as that of the date of the prediction target day.

When the weather is used for the feature of the prediction target day, the calculation unit 112 checks whether the weather of the entry in the travel time table is the same as that of the prediction target day. Alternatively, the weather may be classified into a plurality of groups, and the calculation unit 112 may check whether the weather of the entry in the travel time table falls into the same group as that of the weather of the prediction target day. Here, not only the weather that has been observed on the prediction target day but also information of the weather that has been forecasted for a time zone on which prediction is to be performed may be used for the weather of the prediction target day.

When a feature of a timing of the entry corresponds to a feature of a prediction target day (step 402: YES), the calculation unit 112 adopts observation data of the entry (step 403). The calculation unit 112 then checks whether the entry is the last entry in the travel time table (step 404). When the entry is not the last entry (step 404: NO), the calculation unit 112 repeats the processes of step 401 and steps that follow.

When a feature of a timing of the entry does not correspond to a feature of a prediction target day (step 402: NO), the calculation unit 112 repeats the processes of step 401 and steps that follow without adopting observation data of the entry. When the entry that is referred to is the last entry in the travel time table (step 404: YES), the calculation unit 112 obtains a statistical value of the adopted pieces of observation data (step 405).

Here, as an example, among pieces of observation data "TIME" at time t1 to time tn for each of the entries, observation data "TIME" for each of the times after a prediction start time of the prediction target day is used for the determination of a statistical value. The prediction start time of the prediction target day is, for example, a current time at a point in time at which the travel time prediction process is started. For a statistical value at each of the times, a representative value that represents plural pieces of observation data "TIME" at each of the times is used. As an example, an average value, a weighted average value, a median value, a mode value, or the like of plural pieces of observation data "TIME" is used for the statistical value.

As a result of the process above, time-series statistical values that represent the transition of travel time observed on the days which satisfy the condition that the days are similar to the prediction target day can be obtained. However, an actual travel time observed at the prediction start time of the prediction target day often deviates from the statistical value at the prediction start time that is calculated in step S405.

Here, the inventors have discovered that even when there is a difference between an actual travel time and a statistical value, the difference does not continue to have the same value after a prediction start time. It is expected that after a prediction start time, as an observation time is closer to the prediction start time, a travel time that is to be actually observed becomes closer to a travel time observed at the prediction start time than a statistical value at the observation time. On the other hand, it is expected that as an observation time is farther from a prediction start time, a travel time that is to be actually observed becomes closer to a statistical value at the observation time than a travel time observed at the prediction start time. In other words, it is considered that as an observation time is closer to a prediction start time, a difference between an actual travel time and a statistical value increases, and that as an observation time is farther from a prediction start time, the difference decreases.

In view of the foregoing, it is preferable that a prediction value at each time be generated such that after a prediction start time and at a time closer to the prediction start time, a difference between a prediction value and a statistical value increases, and that at a time farther from the prediction start time, the difference decreases. This allows a travel time observed in the past to be corrected on the basis of fluctuation in traffic volume on a prediction target day, and allows a prediction value reflecting the fluctuation in traffic volume to be generated.

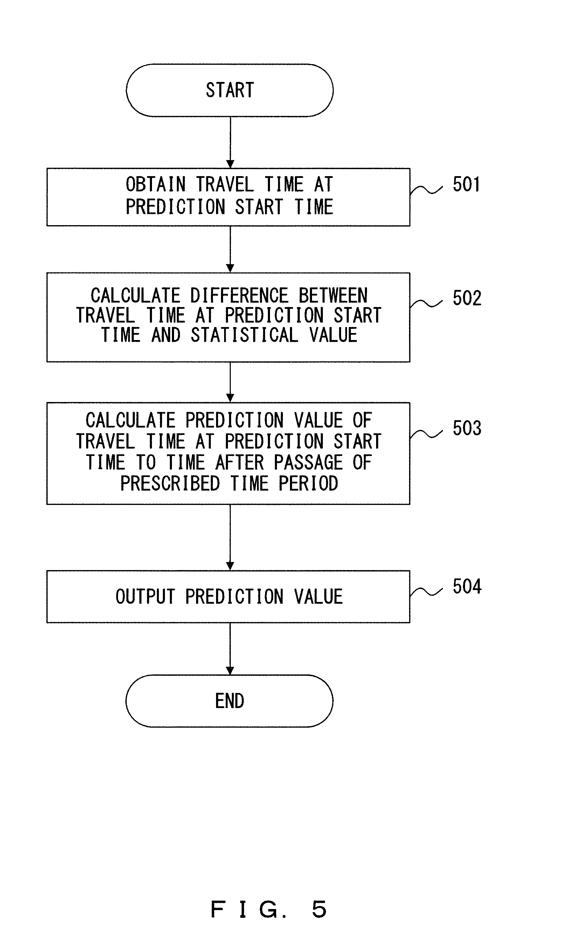

FIG. 5 is a flowchart illustrating an example of a process of calculating a prediction value in step 203 of FIG. 2. The calculation unit 112 first obtains a travel time of a prediction target road section that was observed at a prediction start time of a prediction target day (step 501).

The travel time of the prediction target road section can be obtained by detecting a vehicle passing through the prediction target road section by using, for example, a vehicle sensor, a beacon, or the like that has been installed on a road, and by collecting information such as a position of a passage spot or a passage time of the vehicle. The travel time prediction device 101 may obtain a travel time obtained by another device, via a communication network, or may obtain the information such as a position of a passage spot or a passage time via the communication network and determine a travel time on the basis of the information. For a travel time observed at the prediction start time of the prediction target day, the latest travel time that has been obtained at the predication start time may be used.

The calculation unit 112 then calculates a difference between the observed travel time of the prediction target road section and a statistical value of observation data "TIME" at the prediction start time (step 502). The calculation unit 112 calculates a prediction value of a travel time at each time in a prescribed time period after the prediction start time on the basis of the calculated difference (step 503). Here, the calculation unit 112 calculates the prediction value at each of the times such that at a time closer to the prediction start time, a difference between the prediction value and a statistical value at the time increases, and that at a time farther from the prediction start time, the difference decreases.

A time length of the prescribed time period after the prediction start time may be a fixed length, or may be a time length that is variable on the basis of a prediction target road section, a prediction start day, a prediction start time, or other conditions. In the case of the fixed length, it is considered that the time length has been registered in the storage unit 111 of the travel time prediction device 101 by a user before the process in this example is performed. In the case of the fixed length, the same time length may be set for each of the road sections, or a different time length may be set for each of the road sections. In a case of the variable time length, it is considered that data relating to a condition for changing a time length has been registered before the process in this example is performed. In the case of the variable time length, a time length may be changed in accordance with a magnitude of a difference between a travel time observed at the prediction start time and a statistical value.

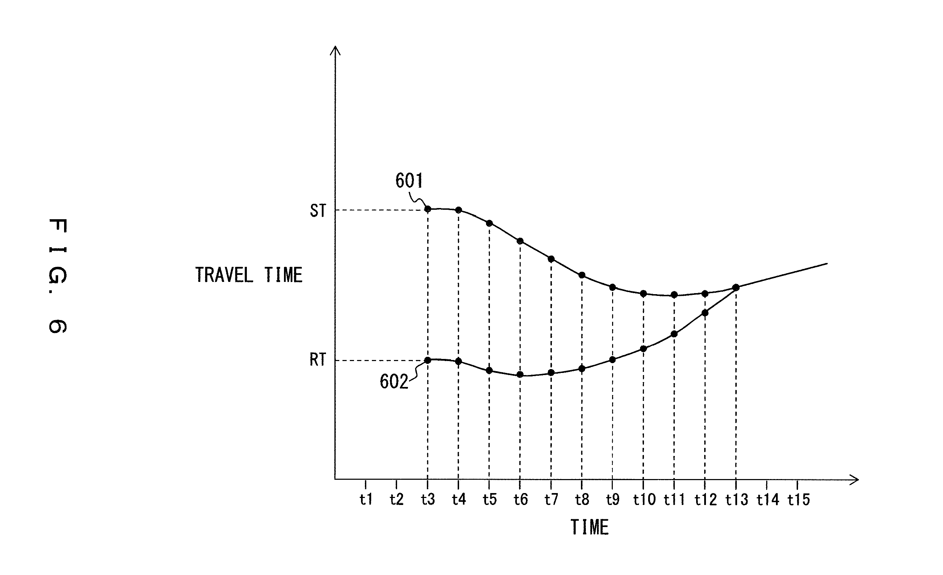

FIG. 6 illustrates an example of a method for calculating a prediction value. The horizontal axis of the graph of FIG. 6 expresses the passage of time on a prediction target day, and the vertical axis expresses a travel time at each time of the prediction target day. Time t3 corresponds to a prediction start time, and time t13 corresponds to a time after the passage of a prescribed time period from the prediction start time. Curve 601 indicates statistical values of travel times at and after the prediction start time t3, and curve 602 indicates prediction values of travel times calculated by the calculation unit 112 from the prediction start time t3 to time t13 after the passage of the prescribed time period.

A prediction value at time t3 on curve 602 matches an actual travel time RT observed at the prediction start time, and a prediction value at time t13 is set such that a difference from a statistical value is 0. Prediction values at time t4 to time t12 are calculated such that a difference between curve 601 and curve 602 gradually decreases in a direction from time t4 to time t12.

In this case, a linear function, a quadratic function, a higher-degree function such as a cubic function or a quartic function, or the like can be used for a function defining a change in a difference between curve 601 and curve 602 with respect to the passage of time. As an example, in a case in which a linear function is used in FIG. 6, when a difference between a statistical value ST and a prediction value RT at time t3 is assumed to be ΔT = |ST-RT|, prediction values at time t3 to time t13 can be calculated as described below.
t3: RT
t4: Statistical value at time t4 - 0.9ΔT
t5: Statistical value at time t5 - 0.8ΔT
t6: Statistical value at time t6 - 0.7ΔT
t7: Statistical value at time t7 - 0.6ΔT
t8: Statistical value at time t8 - 0.5ΔT
t9: Statistical value at time t9 - 0.4ΔT
t10: Statistical value at time t10 - 0.5ΔT
t11: Statistical value at time t11 - 0.5ΔT
t12: Statistical value at time t12 - 0.1ΔT
t13: Statistical value at time t13

The calculation unit 112 can use a weighting factor as described above when performing calculation such that the difference between curve 601 and curve 602 gradually decreases in a direction from time t4 to time t13. In the example above, a weight is used that has been set such that a weight of a travel time at t3 decreases in a direction from t3 to t13. The embodiments are not limited to this example, and a weight may be used that has been set such that a weight of a statistical value at each time increases in a direction from t3 to t13.

A function defining a change in the difference between curve 601 and curve 602 may always be the same function, or may be changed on the basis of a prediction target road section, a prediction start day, a prediction start time, or other conditions. For a prediction value at each time of time t14 and times that follow, a statistical value on curve 601 can be used with no change.

The calculation unit 112 then outputs a prediction value of a travel time at each time of a prediction start time and times after the prediction start time (step 504). In this case, the travel time prediction device 101 may transmit the prediction value of the travel time to a user terminal via a communication network, or may display prediction values of travel times in time series on a screen of a display device.

The respective flowcharts illustrated in FIG. 4 and FIG. 5 are merely exemplary, and a portion of processes may be omitted or changed in accordance with a configuration or a condition of the travel time prediction device 101. As an example, when a prediction value can be calculated without obtaining a difference between a travel time observed at a prediction start time and a statistical value, the process of step 502 of FIG. 5 can be omitted.

When there are a plurality of road sections for which a travel time is predicted, the processes in the flowcharts illustrated in FIG. 4 and FIG. 5 may be performed for each of the plurality of road sections. As an example, assume that a travel time for the entire route from point A to point B including a plurality of road sections is obtained. In this case, the travel time for the entire route can be obtained by calculating a travel time in accordance with the above processing content for each of the plurality of road sections included in the route, and by summing the travel times calculated for the respective road sections.

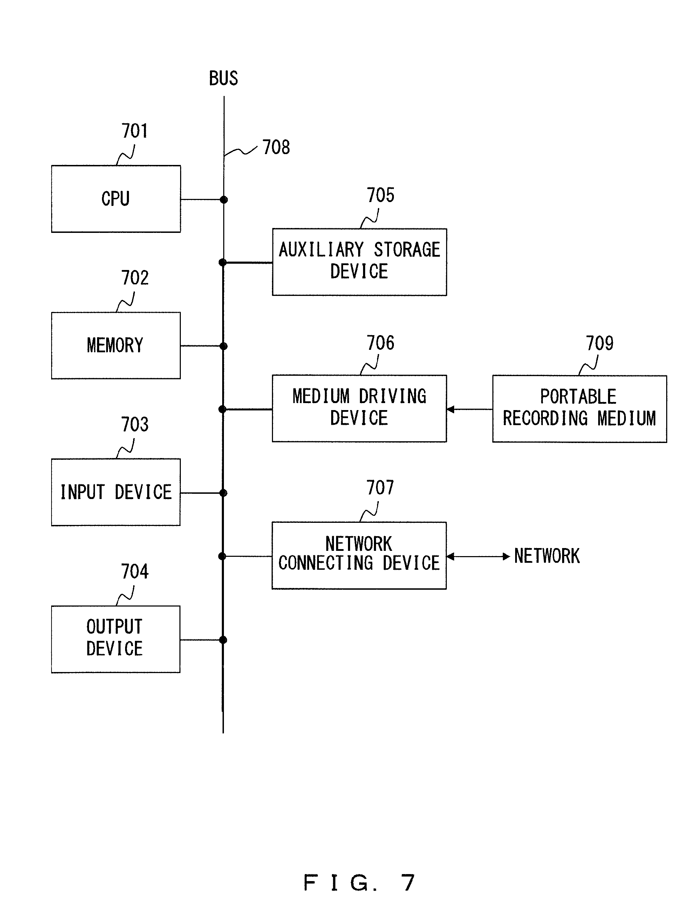

The travel time prediction device 101 of FIG. 1 can be realized by using, for example, an information processing device (computer) as illustrated in FIG. 7.

The information processing device of FIG. 7 includes a Central Processing Unit (CPU) 701, a memory 702, an input device 703, an output device 704, an auxiliary storage device 705, a medium driving device 706, and a network connecting device 707. These components are connected to each other via a bus 708.

The memory 702 is, for example, a semiconductor memory such as a Read Only Memory (ROM), a Random Access Memory (RAM), or a flash memory, and stores a program and data used for processing.

The CPU 701 operates as the calculation unit 112 of FIG. 1 by executing a program by using, for example, the memory 702, and performs the travel time prediction process.

The input device 703 is, for example, a keyboard, a pointing device, or the like, and is used for an input of an instruction or information from a user or an operator. The output device 704 is, for example, a display device, a printer, a speaker, or the like, and is used for an output of an inquiry or a processing result to the user or the operator.

Instructions input by the operator include, for example, a travel time prediction request, and output processing results include, for example, information indicating a prediction value of a travel time at each time from a prediction start time to a prescribed time.

The auxiliary storage device 705 is, for example, a magnetic disk device, an optical disk device, a magneto-optical disk device, a tape device, or the like. Examples of the auxiliary storage device 705 include a hard disk drive. The information processing device can store a program and data in the auxiliary storage device 705, and can use the program and data by loading them onto the memory 702.

The medium driving device 706 drives a portable recording medium 709, and accesses recording contents thereof. The portable recording medium 709 is a memory device, a flexible disk, an optical disk, a magneto-optical disk, or the like. Examples of the portable recording medium 709 include a Compact Disk Read Only Memory (CD-ROM), a Digital Versatile Disk (DVD), a Universal Serial Bus (USB) memory, or the like. A user or an operator can store a program and data in the portable recording medium 709, and can use them by loading them onto the memory 702.

As described above, examples of a computer-readable recording medium in which a program and data used for the travel time prediction process have been stored include a physical (non-transitory) recording medium such as the memory 702, an external storage device 705, or the portable recording medium 709.

The network connecting device 707 is a communication interface that is connected to a communication network such as a Local Area Network (LAN) or the internet, and that performs data conversion accompanying communication.

The information processing device can receive a travel time prediction request from a user terminal via the network connecting device 707, and can transmit information indicating a prediction value, which is a processing result, to the user terminal. The information processing device can also receive a program and data from an external device via the network connecting device 707, and can use them by loading them onto the memory 702.

The information processing device does not need to include all of the components of FIG. 7, and some of the components can be omitted according to applications or conditions. As an example, when the information processing device receives a travel time prediction request from a user terminal via a communication network, the input device 703 and the output device 704 may be omitted.

The disclosed embodiment and the advantages thereof have been described in detail, but those skilled in the art could make various changes, additions, or omissions without departing from the scope of the invention specified in the claims.

## Claims

1. A travel time prediction method performed by a computer, the travel time prediction method comprising:
referring to a storage unit that stores plural pieces of observation data for a road section, the plural pieces of observation data being formed by observing, at a plurality of timings, a travel time taken for a vehicle to pass through the road section;
obtaining a first statistical value of the travel time at a first time of a prediction target day, and a second statistical value of the travel time at a second time that is later than the first time on the basis of two or more of the plural pieces of observation data for the road section; and
calculating a prediction value of the travel time for the road section at the second time on the basis of the first statistical value, the second statistical value, and the travel time for the road section observed at the first time such that a difference between the second statistical value and the prediction value of the travel time for the road section at the second time is smaller than a difference between the first statistical value and the travel time for the road section observed at the first time.

2. The travel time prediction method according to claim 1, wherein
the calculating sets a difference between a third statistical value of the travel time for the road section at a third time and the prediction value of the travel time for the road section at the third time to zero, the third time being a time later than the first time and the second time, and being a time after a prescribed time period from the first time.

3. The travel time prediction method according to claim 1 or 2, wherein
the storage unit stores the plural pieces of observation data formed by observing the travel time at the plurality of timings in association with respective features of the plurality of timings, and
the obtaining the first statistical value and the second statistical value obtains the first statistical value and the second statistical value on the basis of two or more pieces of observation data that correspond to a feature of the prediction target day among the plural pieces of observation data for the road section.

4. A travel time prediction device comprising:
a storage unit that stores plural pieces of observation data for a road section, the plural pieces of observation data being formed by observing, at a plurality of timings, a travel time taken for a vehicle to pass through the road section; and
a calculation unit that obtains a first statistical value of the travel time at a first time of a prediction target day, and a second statistical value of the travel time at a second time that is later than the first time on the basis of two or more of the plural pieces of observation data for the road section, and that calculates a prediction value of the travel time for the road section at the second time on the basis of the first statistical value, the second statistical value, and the travel time for the road section observed at the first time such that a difference between the second statistical value and the prediction value of the travel time for the road section at the second time is smaller than a difference between the first statistical value and the travel time for the road section observed at the first time.

5. A program for causing a computer to execute a process comprising:
referring to a storage unit that stores plural pieces of observation data for a road section, the plural pieces of observation data being formed by observing, at a plurality of timings, a travel time taken for a vehicle to pass through the road section;
obtaining a first statistical value of the travel time at a first time of a prediction target day, and a second statistical value of the travel time at a second time that is later than the first time on the basis of two or more of the plural pieces of observation data for the road section; and
calculating a prediction value of the travel time for the road section at the second time on the basis of the first statistical value, the second statistical value, and the travel time for the road section observed at the first time such that a difference between the second statistical value and the prediction value of the travel time for the road section at the second time is smaller than a difference between the first statistical value and the travel time for the road section observed at the first time.
